# EUROPÄISCHE PATENTANMELDUNG

(11) **EP 1 327 798 A2**
(43) Veröffentlichungstag der Anmeldung: **16.07.2003**
(21) Anmeldenummer: 03000824.7
(22) Anmeldetag: 15.01.2003
(51) Int. Cl.: F16H 57/02

(54) **Getriebe-Motorkombination**

(30) Priorität: 15.01.2002 DE 10201140
(71) Anmelder: Pierburg GmbH, 41460 Neuss (DE)
(72) Erfinder: Köster, Andreas, 45149 Essen (DE); Dismon, Heinrich, 52538 Gangelt (DE)
(74) Vertreter: Westphal, Mussgnug & Partner

(57) **Zusammenfassung**

Ein plattenförmig ausgebildetes Teil (5) vom Gehäuse des Getriebes (2) dient nicht nur als Motorflansch für die Befestigung des Motors (3), sondern auch als Lagerschild für die Aufnahme des Motorlagers (15) und der Achsstifte (7) von Getriebezahnrädern (6,8,11). Weiterhin sind an diesem plattenförmigen Teil (5) Halterungen (25,29) für die Kommutatorbürsten (26) und die zugehörigen Federn (27) sowie Kontaktfahnen (28) für die Stromzuführung vorgesehen. Der Läufer (20) des Motors (3) bildet zusammen mit dem Motorlager (15) und dem Ritzel (9) eine vormontierbare Einheit, die als solche mit dem Motorlager (15) in eine zentrisch am plattenförmigen Teil (5) angeordnete Öffnung (14) einfügbar ist.
Insgesamt ergibt das eine gedrungene Bauweise ohne gesondertes Lagerschild bei hoher Koaxialität.

## Beschreibung

Die Erfindung betrifft eine Getriebe-Motorkombination entsprechend dem Oberbegriff des Patentanspruches 1. Derartige Kombinationen sind bereits bekannt, beispielsweise durch die deutsche Patentschrift DE 43 24 876 C1 oder durch die deutsche Patentanmeldung 100 47 308.33. Sie werden beispielsweise im Bereich der Aktuatorik für Motorkomponenten , z.B. zum Antrieb einer Stelleinheit für Ventile oder Klappensteller, verwendet.

Aufgabe der Erfindung ist es, den Aufbau einer derartigen Kombination zu vereinfachen und deren Baugröße zu verringern. Dies wird durch die kennzeichnenden Merkmale des Patentanspruches 1 erreicht. Danach ist für den Motor kein gesondertes Lagerschild wie bei den bekannten Kombinationen erforderlich, sondern ein plattenförmig ausgebildetes Teil des Getriebegehäuses ist gleichzeitig integraler Bestandteil von Getriebe und Motor, so daß insgesamt auch die Baulänge der Getriebe-Motorkombination verringert wird. Außerdem ergibt sich dadurch eine Verbesserung der Koaxialität, da das Motorlager zugleich Bestandteil des Getriebes ist. Letzters gilt insbesondere, wenn gemäß einer Weiterbildung der Erfindung das plattenförmig ausgebildete Teil des Getriebegehäuses auch als Träger für Achsstifte (7) der Getriebezahnräder (6,8,11,) ausgebildet ist.

Ein weiterer Vorteil ergibt sich bei einer Ergänzung gemäß Patentanspruch 3, indem das plattenförmig ausgebildete Teil auch als Träger für die Kommutatorbürsten und die zugehörigen Federn sowie die Kontaktfahnen für die Stromversorgung ausgebildet ist. Ein gesondertes Bauteil für die Bürstenanordnung ist daher nicht erforderlich.

Weiterhin ist es vorteilhaft, wenn gemäß Patentanspruch 4 der Läufer des Motors eine vormontierte Einheit mit dem Motorlager und dem Ritzel für den Antrieb des Getriebes bildet. Da diese Einheit zuerst mit dem als Lagerschild wirkenden, plattenförmig ausgebildeten Teil zusammengefügt wird, entfällt die Gefahr, daß beim Zusammenfügen ein Span ins Getriebe und damit in den Verzahnungsbereich getrieben wird.

In vorteilhafter Weise kann gemäß Patentanspruch 5 das Ritzel als Verzahnung der Motorwelle ausgebildet sein. Dadurch kann ebenfalls die Baugröße verringert werden. Außerdem vereinfacht sich die Montage, da nach dem Einfügen des Motorlagers in das Lagerschild das Aufpressen des Ritzels entfällt.

Nachfolgend seien Einzelheiten der Erfindung an Hand eines in der Zeichung dargestellten Ausführungsbeispieles näher erläutert. Im Einzelnen zeigen
- FIG 1: einen Querschnitt der Getriebe-Motorkombination in Achsrichtung,
- FIG 2: eine perspektivische Teilansicht des vormontierten Läufermoduls,
- FIG 3: eine perspektivische Teilansicht des integrierten Lagerschildes mit Achsstiften des Getriebes und,
- FIG 4: eine perspektivische Teilansicht des integrierten Lagerschildes mit der Bürstenanordnung.

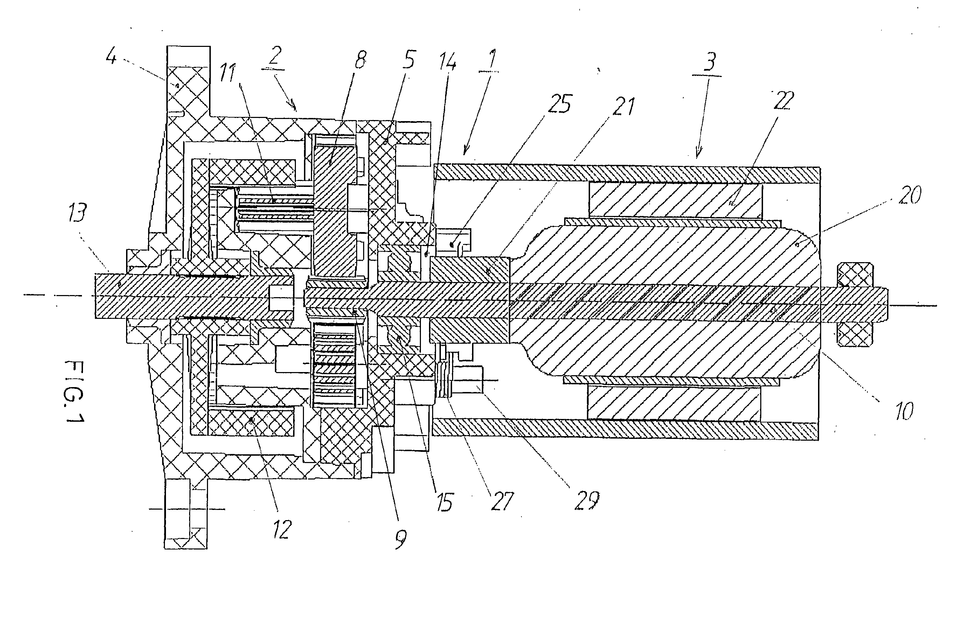

FIG 1 zeigt im linken Teil das Getriebe 2 und im rechten Teil den Motor 3 der Getriebe-Motorkombination 1 gemäß der Erfindung.

Das Getriebe 2 ist beispielsweise entsprechend der deutschen Patentanmeldung 100 47 308.3 als zweistufiges Planetenstandgetriebe ausgebildet. Es beteht aus einem Gehäuse mit einem topfförmig gestalteten ersten Teil 4 und einem plattenförmig gestalteten zweiten Teil 5 , das zugleich als Flansch für den Motor 3 ausgebildet ist. Die erste Getriebestufe besteht aus zum Beispiel drei Planetenrädern 6, deren Achsen als Achsstifte 7 ortsfest am plattenförmig gestalteten zweiten Teil 5 des Getriebegehäuses angebracht sind. Die Planetenräder 6 sind jeweils als gestufte Doppelzahnräder ausgebildet, wobei das jeweils erste Zahnrad 8 mit einem Ritzel 9 auf einer Antriebswelle im Eingriff steht, die im vorliegenden Fall mit der Motorwelle 10 des Motors 3 identisch ist. Die zweite Getriebestufe wird von den in Richtung Abtriebsseite weisenden jeweils zweiten Zahnrädern 11 in Verbindung mit einem Hohlrad 12 gebildet. Dieses Hohlrad 12 ist drehfest mit einer Abtriebswelle 13 gekoppelt und steht in kämmendem Eingriff mit den zweiten Zahnrädern 11.

Im plattenförmig gestalteten zweiten Teil 5 des Getriebegehäuses ist gemäß der Erfindung weiterhin eine zentrisch angeordnete Öffnung 14 zur Aufnahme eines Lagers 15 für die Motorwelle 10 vorgesehen, so daß der zweite Teil 5 des Getriebegehäuses zugleich als Lagerschild für den Motor 3 dient. Eine konzentrisch zur Lageröffnung 14 verlaufende, innen liegende Nase 16 dient dabei als Anschlag für das Motorlager 15.

Der Motor 3 selbst ist mit seinem Gehäuse lediglich soweit schematisch dargestellt, als es für die Erfindung von Bedeutung ist. Gezeigt ist im wesentlichen der auf der Motorwelle 10 angebrachte Läufer 20 mit dem Kommutator 21 und die Ständerwicklung 22. Der Motor 3 ist in bekannter Weise mit dem plattenförmig gestalteten zweiten Teil 5 des Getriebegehäuses als Motorflansch drehfest verbunden.

Der Kommutatator 21 wird zweckmäßig auf der dem Motor 3 zugewandten Seite des plattenförmig gestalteten zweiten Teils 5 des Getriebegehäuses angeordnet, so daß Halterungen 25 für die Kommutatorbürsten 26 und die zugehörigen Federn 27 sowie Kontaktfahnen 28 für die Stromzuführung an diesem Teil 5 angebracht werden können.

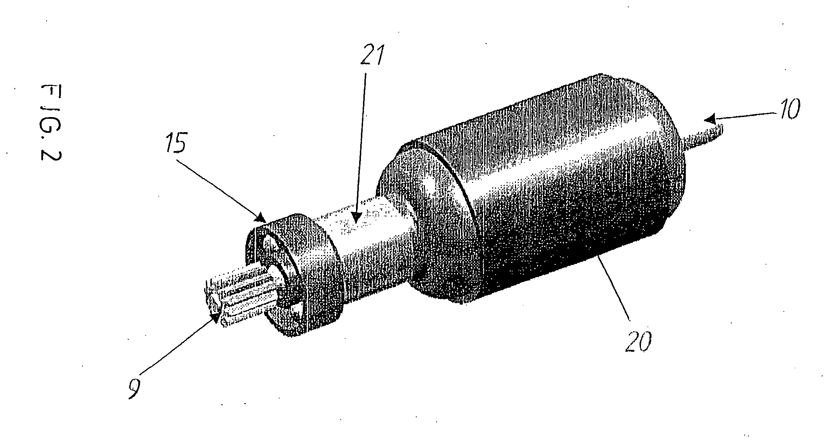

FIG 2 zeigt das zum Einfügen in das als Lagerschild dienende Teil 5 vormontierte Läufermodul, bestehend aus der Motorwelle 10 mit dem Läufer 20, dem Kommutator 21, dem Motorlager 15 und dem Ritzel 9. Nach dem Einfügen kann dann das Motorgehäuse mit dem Ständer über das Läufermodul geschoben und mit dem Motorflansch verbunden werden.

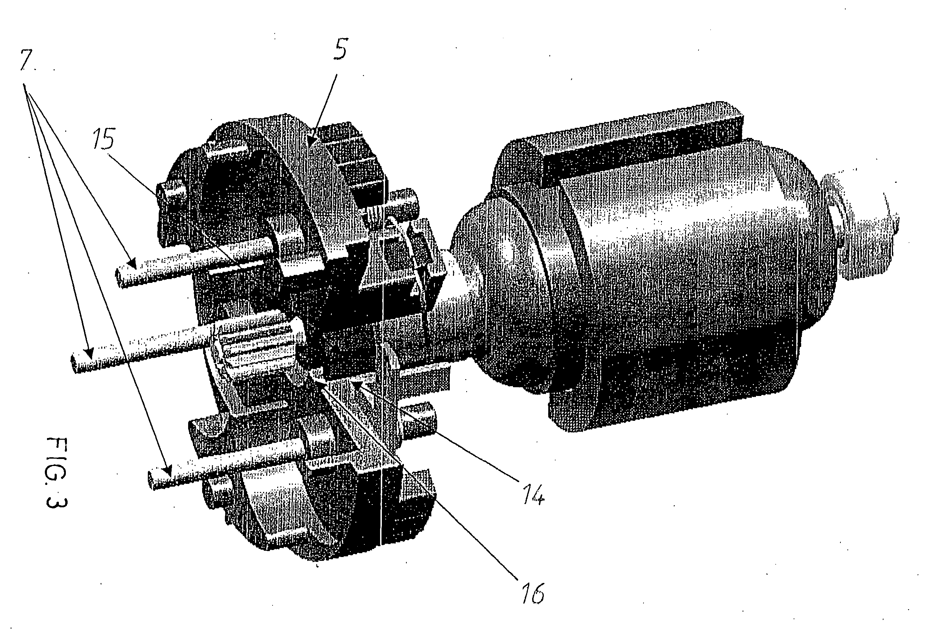

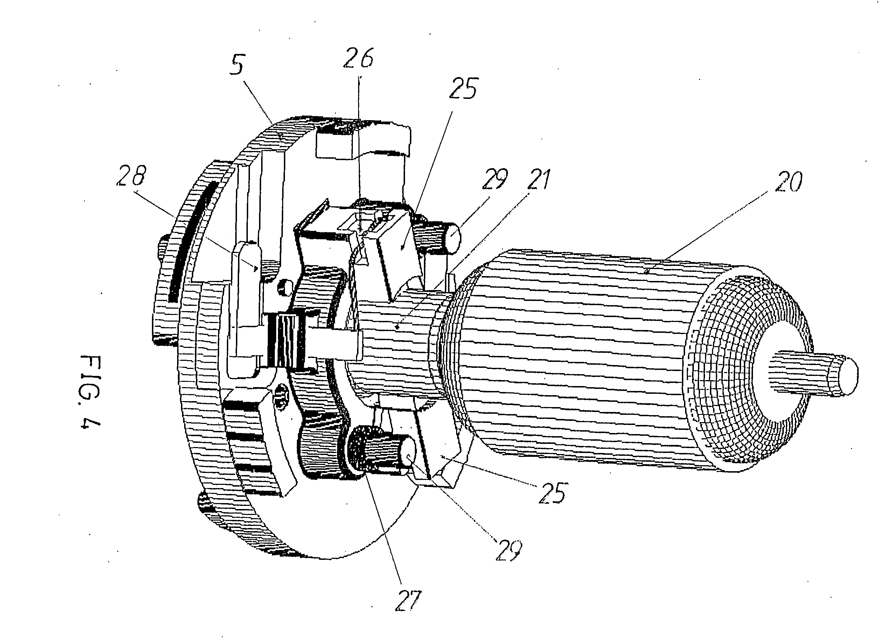

Fig 3 und Fig 4 zeigen perspektivische Teilansichten des plattenförmig gestalteten zweiten Teils 5 des Getriebegehäuses als Lagerschild mit dem eingefügten Läufermodul zur Verdeutlichung von Einzelheiten der Erfindung.

Dabei zeigt FIG 3 einen Blick in das offene Getriebe 2 mit den am Teil 5 befestigten Achsstiften 7 für die hier nicht gezeigten Planetenräder, die vom Ritzel 9 auf der Motorwelle 10 angetrieben werden.

FIG 4 zeigt dagegen einen Blick auf die andere Seite des Teils 5 mit den Halterungen 25 für die Kommutatorbürsten 26, die einander gegenüberliegend angeordnet sind und von Federn 27 auf den Zapfen 29 gegen den Kommutator 21 gedrückt werden. Weiterhin sind hier auch die für die Stromversorgung benötigten Kontaktfahnen 28 vorgesehen, deren Geometrie der jeweils benötigten Komponentenkontaktierung angepaßt ist.

Zusätzlich kann an dem plattenförmig gestalteten Teil des Getriebegehäuses eine oder zwei Drosselspuren ( hier nicht dargestellt) angebracht sein.

Bezugszeichenliste
- 1: Getriebe-Motorkombination
- 2: Getriebe
- 3: Motor
- 4: erstes Teil des Getriebegehäuses
- 5: zweites plattenförmig ausgebildetes Teil des Getriebegehäuses
- 6: Planetenräder
- 7: Achsstifte für die Planetenräder
- 8: erste Zahnräder
- 9: Ritzel
- 10: Motorwelle
- 11: zweite Zahnräder
- 12: Hohlrad
- 13: Abtriebswelle
- 14: zentrische Öffnung
- 15: Motorlager
- 16: Nase
- 20: Läufer
- 21: Kommutator
- 22: Ständer / Magnet
- 25: Halterung
- 26: Kommutatorbürsten
- 27: Federn
- 28: Kontaktfahnen
- 29: Zapfen

## Patentansprüche

1. Getriebe-Motorkombination, bestehend aus einem Motor (3), dessen Welle (10) als Antriebswelle auf das Getriebe (2) mit einer Abtriebswelle (13) einwirkt und dessen Gehäuse über Befestigungsorgane drehfest mit dem Getriebe verbunden ist,
**dadurch gekennzeichnet,**
**daß** Motor (3) und Getriebe (2) durch ein gemeisames, plattenförmig ausgebildetes Teil (5) miteinander gekoppelt sind, das einerseits Bestandteil des Getriebegehäuses ist und andererseits als Lagerschild für die Aufnahme eines Motorlagers (15) ausgebildet ist.

2. Getriebe-Motorkombination nach Anspruch 1,
**dadurch gekennzeichnet,**
**daß** das plattenförmig ausgebildete Teil (5) des Getriebegehäuses auch als Träger für Achsstifte (7) der Getriebezahnräder (6,8,11,) ausgebildet ist.

3. Getriebe-Motorkombination nach Anspruch 1 oder 2,
**dadurch gekennzeichnet,**
**daß** am plattenförmig ausgebildeten Teil (5) des Getriebegehäuses Halterungen (25,29) für die Kommutatorbürsten (26) und die zugehörigen Federn (27) sowie Kontaktfahnen (28) für die Stromzuführung vorgesehen sind.

4. Getriebe-Motorkombination nach einem der Ansprüche 1 bis 3,
**dadurch gekennzeichnet,**
**daß** der Läufer (20) des Motors (3) mit Motorlager (15) und Ritzel (9) eine vormontierte Einheit bildet.

5. Getriebe-Motorkombination nach Anspruch 4,
**dadurch gekennzeichnet,**
**daß** das Ritzel (9) als Verzahnung der Motorwelle (10) ausgebildet ist.
